(19) Europäisches Patentamt
European Patent Office
Office européen des brevets

(11) Veröffentlichungsnummer: **0 340 210 B1**

(12) **EUROPÄISCHE PATENTSCHRIFT**

(45) Veröffentlichungstag der Patentschrift: **03.11.93**

(51) Int. Cl.[5]: **C08L 95/00**

(21) Anmeldenummer: **89890124.4**

(22) Anmeldetag: **27.04.89**

# (54) Masse für Strassenbeläge.

(30) Priorität: **28.04.88 AT 1095/88**

(43) Veröffentlichungstag der Anmeldung:
**02.11.89 Patentblatt 89/44**

(45) Bekanntmachung des Hinweises auf die Patenterteilung:
**03.11.93 Patentblatt 93/44**

(84) Benannte Vertragsstaaten:
**AT BE CH DE ES FR GB GR IT LI LU NL SE**

(56) Entgegenhaltungen:
**FR-A- 2 283 179**
**FR-A- 2 533 935**

(73) Patentinhaber: **MOBIL OIL AUSTRIA AKTIENGESELLSCHAFT**
**Schwarzenbergplatz 16**
**A-1015 Wien(AT)**

(72) Erfinder: **Schuster, Josef, Dr. Dipl.-Ing.**
**Hahngasse 8/34**
**A-1090 Wien(AT)**

(74) Vertreter: **Hamburger, Walter A., Dipl.-Ing.**
**Patentanwaltskanzlei HAMBURGER**
**Postfach 96**
**Mahlerstrasse 9**
**A-1015 Wien (AT)**

**EP 0 340 210 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

So beschreibt die GB-PS 1 376 546 Kunststoffmassen mit einem relativ hohen Anteil an Kunststoff und einem Gehalt an Bitumen und Füllstoffen. Diese Massen werden im Strangguß oder in Blasformen verarbeitet. Als Bitumenkomponente werden dabei mit Gummi versetzte geblasene Bitumina mit einem Zusatz an Fluxöl verwendet. Als Kunststoffe können diese Massen Polyethylen, Polypropylen. Ethylenpropylen-Terpolymere und Ethylenvinylacetat-Copolymere enthalten. Das Fluxöl dient nicht als Weichmacher, sondern als Extenderöl dazu, Ölanteile an das Bitumen nachzuliefern und ein Erhärten der Bitumenanteile, verursacht durch Verharzen und Asphaltenbildung, während des Blasens zu verhindern. Das Fluxöl dient also, wie allgemein beim Blasen üblich, zum Flüssighalten der der Behandlung unterworfenen Masse.

In der EP-B1-202 966 wird eine Belagszusammensetzung auf der Basis von Bitumen und Gummipulver beschrieben, die, neben dem aus Abfallreifen stammenden Gummipulver und Gummiteilen, dem olefinisch ungesättigten Elastomer und dem Bitumenbestandteil noch einen Kohlenwasserstoff-Hilfsstoff, bestehend aus einem naphtheno-aromatischen Rohölschnitt, enthält, der einen Gehalt von mehr als 50% an aromatischen Verbindungen aufweist und einen Flammpunkt oberhalb von 200 °C sowie eine kinematische Viskosität bei 40 °C von über 500 mm/s hat. Insbesondere der hohe Gehalt an Aromaten und die hohe Viskosität des Rohölschnittes zeigen daß dieses öl nicht als Weichmacher, sondern vielmehr als Quellmittel und Loser für das Gummimehl fungiert. Ein solcher Rohölschnitt wäre, insbesondere wegen des hohen Aromatengehaltes, als Innerer Löser/Weichmacher für die erfindungsgemäßen Zwecke unbrauchbar. Bei der Belagszusammensetzung gemäß der EP-B1-202 966 bewirkt der Rohölschnitt eine Anlösung des Gummis und wird während der an der Baustelle erfolgenden Herstellung der Belagszusammensetzung das Gummimehl verändert bzw. thermisch abgebaut. Demgegenüber wird erfindungsgemäß eine fertige polymermodifizierte Bitumenmasse zur Verfügung gestellt, die als Fertigprodukt zur Baustelle verfrachtet werden kann. Beim erfindungsgemäßen Produkt handelt es sich um ein solches, das in einem einfachen Mischvorgang erhalten wird, wogegen das Produkt gemäß der vorgenannen Patentschrift im Zuge einer Reaktion gebildet werden muß.

Ebenfalls bekannt sind bituminöse Formmassen enthaltend u.a. Ethylenvinylacetat-Copolymere, welch letztere in diesen Formmassen in wesentlich größeren Prozentanteilen vorhanden sind als beispielsweise in Kunststoff-modifizierten Bitumina für den Straßenbau. Bei solchen Formmassen, die beispielsweise zur Herstellung von Verkleidungsplatten für Behälter, Vergußmassen zum Ausgießen von Rissen an Gebäuden und Straßendecken, und Bodenbelägen verwendet werden können, treten Alterungserscheinungen auf, durch welche die ursprünglichen Eigenschaften der Formmassen nachteilig verändert werden. Um dieser Alterung vorzubeugen, wurde in der AT-PS 261 888 für solche Massen eine besondere Zusammensetzung vorgeschlagen, die insbesondere ein Bitumen mit einer bestimmten Penetration, Mischpolymerisate aus Ethylen und Vinylestern und/oder mischpolymerisierbaren Acryl- und/oder Methacrylverbindungen, enthaltend Polyisobutylen und/oder ölige Butadienpolymerisate und/oder hochmolekulare Polysulfide und gegebenenfalls Füllstoffe vorsieht.

Auch im Straßenbau werden für Dünnschichtbeläge, für hochstandfeste Beläge für Drain- und Flüsterasphalt mit Kunststoffen modifizierte Bitumina eingesetzt. An solche Spezialbeläge werden besondere Anforderungen hinsichtlich Standfestigkeit, Haftung am Gestein, Salz- und Regenwasserbeständigkeit, Temperaturbeständigkeit in weitem Bereich, Oxidations- und Alterungsbeständigkeit usw. gestellt denen die Eigenschaften von aus Erdöldestillation gewonnenen Bitumina oder auch von Naturasphalten nicht gerecht werden.

Die Industrie formulierte daher eine Reihe von additivierten Bitumina ohne oder mit physikalischer mit oder ohne chemischer Behandlung. Im wesentlichen kann man zwei Gruppen von modifizierenden Zusätzen zu Bitumina unterscheiden:

Gruppe 1: Zusatz von Polyethylen, von Ethylenvinylacetat-Copolymeren (EVA) und ähnlichen Produkten.

Gruppe 2: Zusätze aus Elastomeren, wie SBS (Styrolbutadienstyrol-Pfropfpolymerisat), EPDM (Ethylenpropylenterpolymer), aPP (ataktisches Polypropylen), Gummimehl und ähnlichen Produkten.

Die mit diesen Zusätzen modifizierten Bitumina zeigen Eigenschaften, die schwerpunktmäßig die typischen Basiseigenschaften entweder der Additive von Gruppe 1 oder von Gruppe 2 wiederspiegeln.

Gruppe 1: Wachs-Charakter (Standfestigkeit, Wasserbeständigkeit, Oxidations- und Alterungsbeständigkeit);

Gruppe 2: Elastomer-Charakter (Haftung am Gestein, Temperaturbeständigkeit im weiten Bereich). Diese Aufzählung ist beispielhaft zu verstehen.

Da die Anforderungen an modifizierte Bitumina jedoch die positiven Eigenschaften der beiden oben genannten und bereits bekannten Additivgruppen verlangen, sich jedoch negative Eigenschaften, wie schlechte Mischbarkeit, schlechte Lagerfähigkeit mit Inhomogenitäten, Segregationen usw. nachteilig auf den Gebrauch dieser Additive auswirken, galt es, nach wesentlichen Verbesserungen zu suchen.

Ziel der vorliegenden Erfindung ist es demnach, die positiven Eigenschaften beider Additivgruppen 1 und 2 voll zur Wirkung zu bringen, unabhängig von der chemisch/physikalischen Basisstruktur marktüblicher Bitumina, und gleichzeitig die volle Verträglichkeit beider Additivgruppen in das Bitumen auf Grund erzielter Forschungsergebnisse einstellen zu können.

Es werden in der Folge die Eigenschaften von mit Zusätzen der Gruppe 1 bzw. Zusätzen der Gruppe 2 modifizierten Bitumina erläutert:

Tabelle 1:

Eigenschaften von mit Gruppe 1 modifizierten Bitumina:

| Reihung | 1. | 2. | 3. | 4. | 5. | 6. | 7. | 8. |
|---|---|---|---|---|---|---|---|---|
| Bitumen B 100 | 100% | 95% | 97% | 95% | 90% | 97% | 95% | 90% |
| Polyethylen *1) | | 5% | | | | | | |
| EVA 13-004 *2) | | | 3% | 5% | 10% | | | |
| EVA 33-025 *3) | | | | | | 3% | 5% | 10% |
| Eigenschaften: *4) | | | | | | | | |
| Nadel-Penetration n/10 mm/25°C | 88 | 40 | 64 | 56 | 43 | 117 | 95 | 76 |
| Erweichungspunkt Ring & Kugel, °C | 43 | 62 | 50 | 53 | 57 | 67 | 75 | 85 |
| Brechpunkt Fraas-Methode, °C | -12 | -8 | -13 | -14 | -14 | -14 | -13 | -13 |
| Plastizitätsspanne | 55 | 70 | 64 | 67 | 71 | 71 | 88 | 98 |
| Elastische Rückfederung nach 200% Dehnung (ERF) (ger.= gerissen) | 95 | ger. | ger. | 65 | ger. | 80 | 65 | 60 |
| Homogenitätstest (OK=in Ordnung n.OK = nicht in Ordnung | OK | n.OK | n.OK | n.OK | n.OK | n.OK | n.OK | n.OK |

*1) Polyethylen mit M.I. (Schmelzindex) von 2,

*2) Ethylenvinylacetat mit M.I. von 4 und VA (Vinylacetatgehalt) von 13 Gew.-%

*3) Ethylenvinylacetat mit M.I. von 25 und VA-Gehalt von 33 Gew.-%

*4) Eigenschaften nach ÖNORM, außer: Plastizitätsspanne, rechnerische Größe aus Erweichungspunkt plus Absolutbetrag des Brechpunktes; Elastische Rückfederung nach Duktilitätsprüfung auf 200% Dehnung und Messung der Rückfederung (100 : 0% Rückfederung, 0 : 100% Rückfederung).

Aus den angeführten Beispielen geht hervor, daß die Wirkung der Additive der Gruppe 1 mit Zunahme der Additivierung sehr rasch abnimmt und gegenteilige Effekte auftreten: mangelnde Kohäsion oder Adhäsion; niedrigmolekulares Copolymer (hoher M.I.) bzw. hochmolekulares Copolymer (niedriger M.I.). Alle Mischungen weisen Entmischungstendenz auf.

Tabelle 2:

Eigenschaften von mit Gruppe 2 modifizierten Bitumina:

| Reihung | 1. | 2. | 3. | 4. | 5. | 6. |
|---|---|---|---|---|---|---|
| Bitumen B 400 | 100% | 98% | 96% | 94% | 95% | 90% |
| SBS *1) | | 2% | 4% | 6% | | |
| Gummimehl, 400µm max. | | | | | 5% | 10% |
| Eigenschaften: | | | | | | |
| Nadel-Penetration n/10 mm/25°C | 88 | 62 | 50 | 44 | 73 | 67 |
| Erweichungspunkt Ring & Kugel, °C | 43 | 53 | 79 | 88 | 48 | 52 |
| Brechpunkt Fraas-Methode, °C | -12 | -20 | -24 | -27 | -16 | -19 |
| Plastizitätsspanne | 55 | 73 | 103 | 115 | 64 | 71 |
| Elastische Rückfederung | 95 | 25 | 10 | 7 | 80 | 59 |
| Homogenitätstest | OK | n.OK | n.OK | n.OK | n.OK | n.OK |

*1 Styrolbutadienstyrol-Pfropfpolymer mit 30% Styrolanteil.

Bei Verwendung von Additiven der Gruppe 2 kommt es zu Produktsegregierungen, Inhomogenitäten, geringer Lagerstabilität und geringer Kohäsion.

Vorliegende Erfindung, basierend auf Grundlagenforschung, ermöglicht die volle Nutzung der Basiseigenschaften der genannten Additive und erlaubt die Kombination der Additive der Gruppe 1 mit denen der Gruppe 2. Basis der vorliegenden Erfindung ist die Erzielung einer bestmöglichen Verträglichkeit der Komponenten und damit einer bestmöglichen Homogenität.

Demnach betrifft die vorliegende Erfindung eine Masse für Straßenbeläge u. dgl., wie sie im Patentanspruch 1 beschrieben ist.

Die US-PS 3 491 047 betrifft thermoplastische Massen auf Bitumenbasis, hergestellt (A) durch Umsetzung von Bitumen bei einer Temperatur von 100 bis 200°C mit etwa 5 bis 30 Gew.-% Maleinsäureanhydrid, gefolgt von (B) einer Umsetzung bei entsprechend hoher Temperatur, so daß die Erweichung der Reaktanten ihre enge Berührung gestattet, mit einem Polymer mit willkürlich verteilten Monomereinheiten. Es handelt sich in diesem Falle um eine thermoplastische Masse, die im Zuge einer komplizierten Modifizierungs- und Anlagerungsreaktion erhalten wurde und mit der erfindungsgemäßen, aus einem reinen Mischvorgang erhaltenen Masse chemisch und physikalisch nichts mehr zu tun hat. Bei dieser thermoplastischen Masse kommt es auch nicht mehr darauf an, einen speziellen inneren Weichmacher/Löser zu verwenden, weil in ihr nicht, wie erfindungsgemäß, das Problem auftritt, in einer reinen Mischung die vorteilhaften Eigenschaften von zwei an sich unverträglichen Additivgruppen, unabhängig von der chemisch/physikalischen Basisstruktur üblicher Bitumina, voll zur Wirkung zu bringen und gleichzeitig die volle Verträglichkeit beider Additivgruppen in das Bitumen einstellen zu können. Aus diesem Grunde werden in der US-PS 3 491 047 als bevorzugte Weichmacheröle solche mit einem Gehalt an aromatischen Ringen von 15 bis 75 Gew.-% eingesetzt, also auch öle, die, wenn man zusätzlich noch in Betracht zieht,

daß neben den Aromaten auch noch Aliphaten vorhanden sind, einen so geringen Gehalt an Naphthenen aufweisen, daß sie als innerer Weichmacher/Löser für die erfindungsgemäßen Zwecke völlig ungeeignet wären.

Zur Erzielung bester Ergebnisse können als "Innere Weichmacher / Löser" Ethylenvinylacetat-Copolymere (M.I. 33 bis 500, VA 18 bis 45 Gew.-%) in Mengen von bis zu 10 Gew.-% eingesetzt werden, wobei SBS in Anteilen von bis zu 10 Gew.-% und EVA mit einem MI von 0.3 bis 33 und einem VA-Gehalt von 3 bis 15 Gew.-% in Anteilen von bis zu 10 Gew.-%, bezogen auf die Gesamtmasse, formuliert werden.

Es können beliebige zweckentsprechende Bitumina eingesetzt werden, vorzugsweise werden Bitumina der öNORM Type B 200, B 100, B 70, insbesondere B 100, verwendet.

Weitere, für die Zwecke der vorliegenden Erfindung geeignete Bitumina sind die entsprechend der öNORM Type B 40, B 10 (vorwiegend geblasene Bitumina), wobei jedoch der Zusatz an naphthenbasischem öl erhöht wird und im Bereich von bis 20 Gew.-%, vorwiegend etwa 12 Gew.-%, liegt.

Anstelle von Vinylacetat-Copolymeren als Komponente der Gruppe 1 können mit gleicher Zielrichtung Ethylenpolyacrylate verwendet werden.

Als SBS wird ein solches mit einem Styrolanteil von 20 bis 60 Gew.-% verwendet, die Verwendung von anderen Elastomeren der Gruppe 2, z.B. APP. Gummimehl unaufgeschlossen und chemisch aufgeschlossen (auch als Lösung) ist ebenfalls möglich.

Eine typische Analyse eines für die erfindungsgemäßen Zwecke brauchbaren naphthenbasischen öls ist beispielsweise

| | |
|---|---|
| Dichte bei 15 °C | 0,896 |
| Flammpunkt COC | 213 °C |
| Viskosität bei 40 °C | 110 $mm^2/s$ |
| bei 100 °C | 11 " |
| Neutralisationszahl | 0,05 mg KOH/g |
| Anilinpunkt | 103 °C |
| Stockpunkt | -37 °C |
| Siedebeginn | 313 °C |
| Naphthene (IR-Methode) | 58% |

Die Erfindung wird durch die folgenden Beispiele näher erläutert. Die angeführten Beispiele sind sowohl ausgezeichnete Dünnschicht- als auch Drainasphalt-Formulierungen.

Die modifizierten Bitumina (Beispiele 1 und 2) können nach einer beliebigen, zu einem homogenen Gemisch führenden Mischmethode hergestellt werden. Eine bevorzuge Herstellungsmethode besteht darin, daß Bitumen einer bestimmten Type in einem Mischbehälter genügender Kapazität (z.B. 30 $m^3$) vorgelegt und auf 180 °C gehalten wird. Danach werden die "Inneren Weichmacher/Löser" unter gutem Rühren eingebracht, nach etwa einer halben Stunde die Zusätze der Gruppe 1 (z.B. EVA) und nach einer weiteren halben Stunde die Zusätze der Gruppe 2 (z.B. SBS). Nach etwa 3 Stunden intensiven Rührens ist der Mischvorgang beendet, wobei herkömmliche Intensivmischer mit starken Scherkräften von Vorzug sind. Die Homogenität der Mischung wird durch Vergleich von Oben/Untenproben gesichert (z.B. Ring und Kugel - Erweichungspunkt). Ferner muß das so modifizierte Bitumen am Glasstab glatt ablaufen (es darf keine nicht gelösten Bestandteile enthalten).

Die modifizierten Bitumina gemäß den Vergleichsbeispielen können unter Anwendung desselben Mischvorganges hergestellt werden.

Beispiel 1 und Vergleichsbeispiele A, B:

| Tabelle 3: | 1 | A | B |
|---|---|---|---|
| Bitumen B 100 | 93 Gew.-% | 93 Gew.-% | 93 Gew.-% |
| SBS | 2 Gew.-% | 2 Gew.-% | 4 Gew.-% |
| EVA (VA=13 Gew.-%;MI=004) | 3 Gew.-% | 5 Gew.-% | 3 Gew.-% |
| Innerer Weichmacher EVA (VA=18 Gew.-%;MI=150) | 2 Gew.-% | | |
| **Eigenschaften:** | | | |
| Nadelpenetration $^{n}$/10 mm/25°C | 53 | 48 | 42 |
| Erweichungspunkt Ring & Kugel, °C | 80 | 68 | 83 |
| Brechpunkt Fraas-Methode, °C | -21 | -17 | -15 |
| Plastizitätsspanne | 101 | 85 | 98 |
| Elastische Rückfederung | 22 | 40 | 10 |
| Homogenitätstest | OK | n.OK | n.OK |

Der Homogenitätstest wird als Tubentest ausgewertet, wobei vom erkalteten Material fünf Proben in Form von gleichen Scheiben genommen und physikalische Eigenschaften, wie Dichte, Nadel-Penetration, Erweichungspunkt, ermittelt werden. Für mit "Inneren Weichmachern" modifizierte Bitumina sind alle Unterschiede unter 1% des jeweiligen Meßwertes und damit als homogen einzustufen. Für die beiden angeführten Vergleichsformulierungen zeigen z.B. die Erweichungspunkte Unterschiede zwischen Boden- und Obenproben des Tubentests von mehr als 5%.

Beispiel 2 und Vergleichsbeispiele C, D, E:

| Tabelle 4: | 2 | C | D | E |
|---|---|---|---|---|
| Bitumen B 100 | 86 Gew.-% | 93 Gew.-% | 90 Gew.-% | 88 Gew.-% |
| SBS | 3 Gew.-% | 3 Gew.-% | 3 Gew.-% | 3 Gew.-% |
| EVA (VA=13 Gew.-%;MI=004) | 4 Gew.-% | 4 Gew.-% | 4 Gew.-% | 4 Gew.-% |
| Naphth. öl | 7 Gew.-% | | 3 Gew.-% | 5 Gew.-% |
| **Eigenschaften:** | | | | |
| Nadelpenetration n/10 mm/25°C | 78 | 50 | 62 | 74 |
| Erweichungspunkt Ring & Kugel | 85 | 66 | 67 | 75 |
| Brechpunkt Fraas-Methode, °C | -25 | -15 | -18 | -22 |
| Plastizitätsspanne | 111 | 81 | 85 | 97 |
| Elastische Rückfederung | 4 | 10 | 7 | 8 |
| Homogenitätstest | OK | n.OK | n.OK | n.OK |

Die Vergleichsformulierungen enthielten keinen oder eine nur geringe Menge an "Innerem Weichmacher/Löser". Auch hier zeigt sich bei Optimierung des "Inneren Lösers/Weichmachers" mit 7% Zusatz die beste Wirkung der Additive. Bei höherem Zusatz erfolgt keine nennenswerte weitere Verbesserung, die Formulierungen steigen in ihrer Penetration jedoch stark an. das modifizierte Bitumen wird zu weich.

**Patentansprüche**

1. Masse für Straßenbeläge, bestehend aus 85 bis 97 Gew.-% Bitumen und 3 bis 15 Gew.-% einer Additivkomponente bestehend aus 1) Ethylenvinylacetat-Copolymeren mit einem Schmelzindex von 0,3 bis 33 und einem Vinylacetatgehalt von 3 bis 15 Gew.-% und/oder Ethylenpolyacrylate, und 2) Styrolbutadienstyrol-Pfropfpolymerisaten mit einem Styrolanteil von 20 bis 60 Gew.-%, ataktischem Polypropylen, Gummimehl oder Gemischen hiervon, dadurch gekennzeichnet daß sie zusätzlich einen inneren Weichmacher/Löser der Gruppe Ethylenvinylacetat-Copolymere mit einem Schmelzindex von 33 bis 500 und einem Vinylacetatgehalt von 18 bis 45 Gew.-% und/oder 7 bis 20 Gew.-%, bezogen auf die Gesamtmasse, naphthenbasische öle mit einem Gehalt von mindestens 55% Naphthenen, bestimmt nach der IR-Methode, und einer Viskosität bei 40 °C von max. 300 $mm^2/s$ enthält.

2. Masse nach Anspruch 1, dadurch gekennzeichnet, daß sie den inneren Weichmacher/Löser in einem Anteil von 7 bis 10 Gew.-%, bezogen auf die Gesamtmasse, enthält.

3. Masse nach Anspruch 1, dadurch gekennzeichnet, daß das Bitumen aus der Gruppe B 200, B 100, B 70, B 40, B 10 (öNORM 3610) oder Gemischen hiervon ausgewählt ist.

## Claims

1. Material for road surfacing courses comprising mass fractions of 85 to 97% bitumen and 3 to 15% of an additive consisting of 1) ethylene vinyl acetate copolymers with a melt index of 0.3 to 33 and a vinyl acetate mass fraction of 3 to 15% and/or ethylene polyacrylates, and 2) styrene-butadiene-styrene graft copolymers with a styrene mass fraction of 20 to 60%, atactic polypropylene, ground rubber, or mixtures thereof, characterized therein that said material is additionally provided with an internal plasticizer/solubilizer of the ethylene vinyl acetate copolymer group with a melt index of 33 to 500 and a vinyl acetate mass fraction of 18 to 45% and/or 7 to 20%, relative to the total mass, of naphthenic base oils with a mass fraction of at least 55% naphthenes, as determined by the IR method, and a maximum viscosity at 40 °C of 300 $mm^2/s$.

2. Material as claimed in claim 1, characterized therein that the mass fraction of the internal plasticizer/solubilizer ranges from 7 to 10%, relative to the total mass.

3. Material as claimed in claim 1, characterized therein that the bitumen is selected from Group B 200, B 100, B 70, B 40, B 10 (ÖNORM 3610) or mixtures thereof.

## Revendications

1. Matériau pour surfaces routières consistant en 85 % à 97 % en poids de bitume et de 3 % à 15 % en poids d'un composant additif consistant en 1) copolymères d'éthylène-vinyl-acétate ayant un indice de fusion de 0,3 à 33 et une teneur en acétate de vinyl de 3 % à 15 % en poids et/ou de polyacrylates d'éthylène, et 2) polymères greffés de styrène-butadienne-styrène avec 20 % à 60 % en poids de styrène, polyprolylène atactique, farine de caoutchouc ou un mélange de ces derniers, caractérisé en ce qu'il présente un plastifiant/solvant interne du groupe copolymère d'ethylène-vinyl-acétate avec un indice de fusion de 33 à 500 et une teneur en acétate de vinyl de 18 % à 45 % en poids et/ou 7 % à 20 % en poids rapportés à la masse totale des huiles de base naphténiques avec une teneur d'au moins 55 % de naphthènes, déterminés selon la méthode IR, et une viscosité de 300$mm^2/s$ au maximum à 40 °C.

2. Matériau selon la revendication 1, caractérisé en ce qu'il contient le plastifiant/solvant interne dans une proportion de 7 % à 10 % en poids rapportés à la masse totale.

3. Matériau selon la revendication 1, caractérisé en ce que le bitume est sélectionné dans le groupe B 200, B 100, B 70, B 40, B 10 (öNORM 3610) ou des mélanges de ceux-ci.